(19) Europäisches Patentamt
European Patent Office
Office européen des brevets

(11) **EP 1 755 331 A1**

(12) **EUROPEAN PATENT APPLICATION**
published in accordance with Art. 158(3) EPC

(43) Date of publication:
**21.02.2007 Bulletin 2007/08**

(51) Int Cl.:
*H04N 5/20* (2006.01)     *G06T 5/00* (2006.01)
*G06T 5/20* (2006.01)     *H04N 1/407* (2006.01)

(21) Application number: **05751456.4**

(22) Date of filing: **06.06.2005**

(86) International application number:
**PCT/JP2005/010350**

(87) International publication number:
**WO 2005/122552 (22.12.2005 Gazette 2005/51)**

(84) Designated Contracting States:
**AT BE BG CH CY CZ DE DK EE ES FI FR GB GR HU IE IS IT LI LT LU MC NL PL PT RO SE SI SK TR**

(30) Priority: **10.06.2004  JP 2004172212**

(71) Applicant: **SONY CORPORATION Tokyo 141-0001 (JP)**

(72) Inventors:
• **KOSAKAI, Ryota, c/o SONY CORPORATION Tokyo 1410001 (JP)**

• **KINOSHITA, Hiroyuki, c/o SONY CORPORATION Tokyo 1410001 (JP)**

(74) Representative: **Keston, Susan Elizabeth et al D Young & Co 120 Holborn London EC1 2DY (GB)**

(54) **IMAGE PROCESSING DEVICE, METHOD, AND PROGRAM**

(57)     The present invention relates to an image processing apparatus, method, and program which compress images so as to improve contrast without losing sharpness. An adder 33 calculates an illumination-component addition/subtraction remaining amount T (L) by an adder 25 to a multiplier 32. An adder 34 adds T (L) to an original illumination component, and calculates a gain-optimum illumination component T (L)'. An aperture controller 23 performs aperture correction which is dependent on an illumination-component level on the basis of an adaptation area determined by a reflectance-gain coefficient calculation section 35. An adder 37 adds T (L)' to the texture component after the aperture correction. Thus, a luminance signal Y2 after dynamic-range compression is obtained. An HPF 41 to an adder 43 perform LPF processing on a chroma signal of a low-band level portion. Thus, a chroma signal C2 after the dynamic-range compression is obtained. The present invention can be applied to a digital video camera.

FIG. 2

EP 1 755 331 A1

## Description

Technical Field

The present invention relates to an image processing apparatus, method, and program capable of appropriately compressing captured digital images.

Background Art

To date, in a digital image recording apparatus, for example, a digital video camera, etc., a contrast-enhanced method by grayscale conversion has been considered as a method for appropriately compressing the input range of a digital image captured by a solid-state imaging device and A/D (Analog to Digital) converted so as to convert the image into a recording range without losing a contrast feeling (difference in light and shade) and sharpness (clearness in boundaries).

For typical methods of this contrast-enhanced method, for example, a tone-curve adjustment method in which the pixel level of each pixel of an image is converted by a function (in the following, referred to as a level-conversion function) having a predetermined input/output relationship, or a method called "histogram equalization" in which the level-conversion function is adaptively changed in accordance with the frequency distribution of pixel levels, have been proposed.

When these contrast-enhanced methods are used, there has been a problem in that contrast cannot be improved in only a part of a luminance area among the entire dynamic range (the difference between the maximum level and the minimum level) of an image. On the contrary, there has been a problem in that contrast has been decreased in the lightest part and the darkest part of an image in the case of the tone-curve adjustment, and in the vicinity of a luminance area having a little frequency distribution in the case of the histogram equalization. Furthermore, in the contrast-enhanced method, there has been a problem in that the contrast in the vicinity of an edge which includes high frequency signals is also enhanced, unnatural amplification is induced, and thus deterioration in image quality cannot be prevented.

Accordingly, for example, Patent Document 1 has proposed a technique in which the entire contrast and sharpness is improved without losing sharpness of an image by amplifying the parts other than the edges while keeping edges having a sharp change of pixel values among input image data in order to enhance the parts other than edges.

[Patent Document 1] Japanese Unexamined Patent Application Publication No. 2001-298621

Disclosure of Invention

Problems to be solved by the invention

However, when the above-described technique of Patent Document 1 is applied to a camera-signal processing system, there has been a problem in that the processing load becomes very high.

Also, there has been a problem in that when the technique is applied to a Y/C-separated color image, a Y signal is subjected to appropriate processing, but the corresponding C signal is not subjected to any processing, and thus a desired result fails to be obtained.

Means for Solving Problems

The present invention has been made in view of these circumstances, and an aim is to make it possible to improve contrast without losing sharpness by appropriately compressing a captured digital image.

Advantages

By the present invention, it is possible to appropriately compress a captured digital image. In particular, it becomes possible to improve contrast without losing sharpness, and to appropriately compress a captured digital image while decreasing the processing load.

Brief Description of the Drawings

[Fig. 1] Fig. 1 is a diagram illustrating an example of the configuration of a recording system of a digital video camera to which the present invention is applied.

[Fig. 2] Fig. 2 is a block diagram illustrating an example of the internal configuration of a dynamic-range compression section.

[Fig. 3A] Fig. 3A is a diagram illustrating the details of the edge detection of an LPF with an edge-detection function.

[Fig. 3B] Fig. 3B is a diagram illustrating the details of the edge detection of the LPF with an edge-detection function.

[Fig. 4] Fig. 4 is a diagram illustrating levels in an edge direction.

[Fig. 5A] Fig. 5A is a diagram illustrating an example of an offset table.

[Fig. 5B] Fig. 5B is a diagram illustrating an example of the offset table.

[Fig. 6A] Fig. 6A is a diagram illustrating another example of an offset table.

[Fig. 6B] Fig. 6B is a diagram illustrating another example of the offset table.

[Fig. 7A] Fig. 7A is a diagram illustrating an example of a reflectance-gain coefficient table.

[Fig. 7B] Fig. 7B is a diagram illustrating an example of the reflectance-gain coefficient table.

[Fig. 8A] Fig. 8A is a diagram illustrating an example of a chroma-gain coefficient table.

[Fig. 8B] Fig. 8B is a diagram illustrating an example of the chroma-gain coefficient table.

[Fig. 9] Fig. 9 is a diagram illustrating an example of a determination area.

[Fig. 10] Fig. 10 is a flowchart illustrating compression processing of a luminance signal.

[Fig. 11] Fig. 10 is a flowchart illustrating compression processing of a chroma signal.

[Fig. 12A] Fig. 12A is a diagram illustrating a processing result of a luminance signal.

[Fig. 12B] Fig. 12B is a diagram illustrating a processing result of a luminance signal.

[Fig. 12C] Fig. 12C is a diagram illustrating a processing result of a luminance signal.

[Fig. 13A] Fig. 13A is a diagram illustrating a processing result of a chroma signal.

[Fig. 13B] Fig. 13B is a diagram illustrating a processing result of a chroma signal.

[Fig. 14] Fig. 14 is a block diagram illustrating an example of the configuration of a computer.

Reference Numerals

1 digital video camera, 11 solid-state imaging device, 12 camera-signal processing section, dynamic-range compression section, 14 recording-format processing section, 15 recording medium, 21 LPF with edge-detection function, 22 adder, 23 aperture controller, 24 microcomputer, 25, 26 adders, 27 illumination-component offset table, 28 multiplier, 29 adder, 30 multiplier, 31 illumination-component offset table, 32 adder, 3334 adders, 35 reflectance-gain coefficient calculation section, 36, 37 adders, 38 chroma-gain coefficient calculation section, 39 multiplier, 40 chroma-area determination section, 41 HPF, 42 multiplier, 43 adder

Best Mode for Carrying Out the Invention

In the following, a description will be given of an embodiment of the present invention with reference to the drawings.

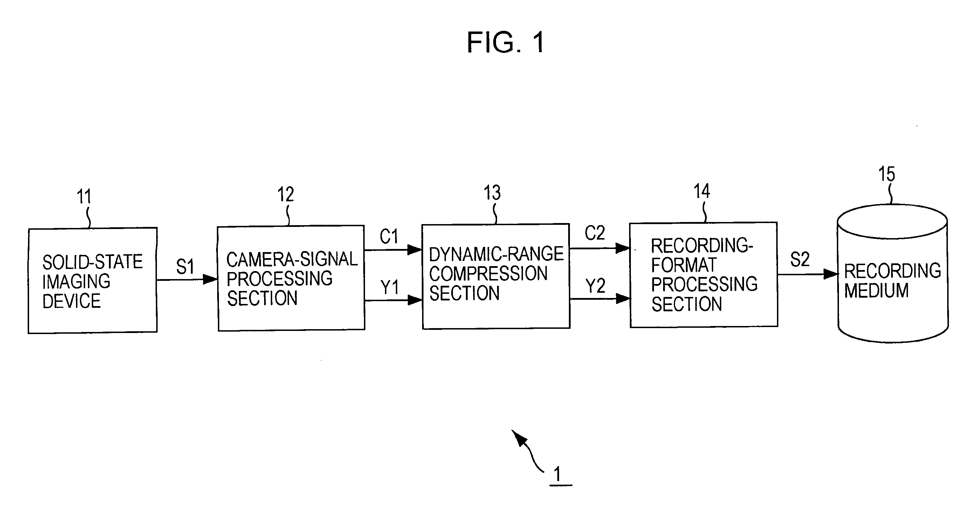

Fig. 1 is a diagram illustrating an example of the configuration of a recording system of a digital video camera 1 to which the present invention is applied.

A solid-state imaging device 11 includes, for example CCD (Charge Coupled Devices), a C-MOS (Complementary Metal Oxide Semiconductor), etc., generates an input image data S1 by photoelectric converting a light image of an incident object of shooting, and outputs the generated input image data S1 to a camera-signal processing section 12. The camera-signal processing section 12 performs signal processing, such as sampling processing, YC separation processing, etc., on the input image data S1 input by the solid-state imaging device 11, and outputs a luminance signal Y1 and a chroma signal C1 to a dynamic-range compression section 13.

The dynamic-range compression section 13 compresses the luminance signal Y1 and the chroma signal C1 input by the camera-signal processing section 12 into a recording range so as to improve contrast without impairing sharpness, and outputs the compressed luminance signal Y2 and the chroma signal C2 to a recording-format processing section 14. The recording-format processing section 14 performs predetermined processing, such as addition of an error-correcting code and modulation, etc., on the luminance signal Y2 and the chroma signal C2 input by the dynamic-range compression section 13, and records a signal S2 into a recording medium 15. The recording medium 15 includes, for example a CD-ROM (Compact Disc-Read Only Memory), a DVD (Digital Versatile Disc), a semiconductor memory, or the like.

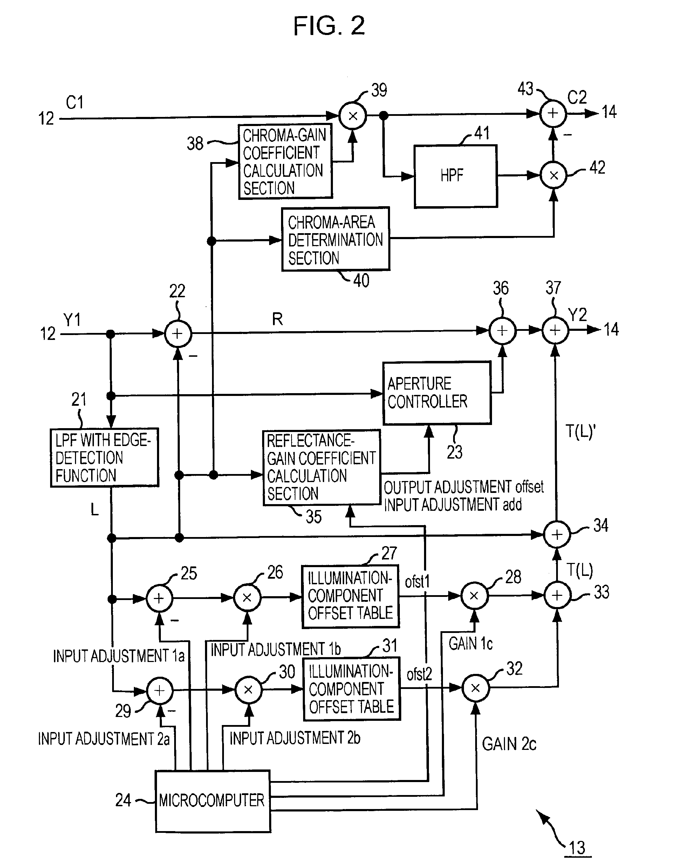

Fig. 2 is a block diagram illustrating an example of the internal configuration of the dynamic-range compression section 13.

In the case of Fig. 2, the dynamic-range compression section 13 is roughly divided into a block for performing the processing of the luminance signal Y1 and a block for performing the processing of the chroma signal C1. Also, adders 25 to 34 constitute a block for performing a dark portion of the luminance signal Y1, and an adder 22, an aperture controller 23, a reflectance-gain coefficient calculation section 35, and an adder 36 constitute a block for performing a light portion of the luminance signal Y1.

The luminance signal Y1 output from the camera-signal processing section 12 is input into an LPF (Lowpass Filter) with an edge-detection function 21, the adder 22, and the aperture controller (aper-con) 23, and the chroma signal C1 is input into a multiplier 39.

The LPF with an edge-detection function 21 extracts an illumination component (edge-saved and smoothed signal L) from the input luminance signal Y1, and individually supplies the extracted smoothed signal L to the adders 22, 25, 29, and 34, the reflectance-gain coefficient calculation section 35, a chroma-gain coefficient calculation section 38, and a chroma-area determination section 40. In the following, the edge-saved and smoothed signal L is abbreviated to a signal L.

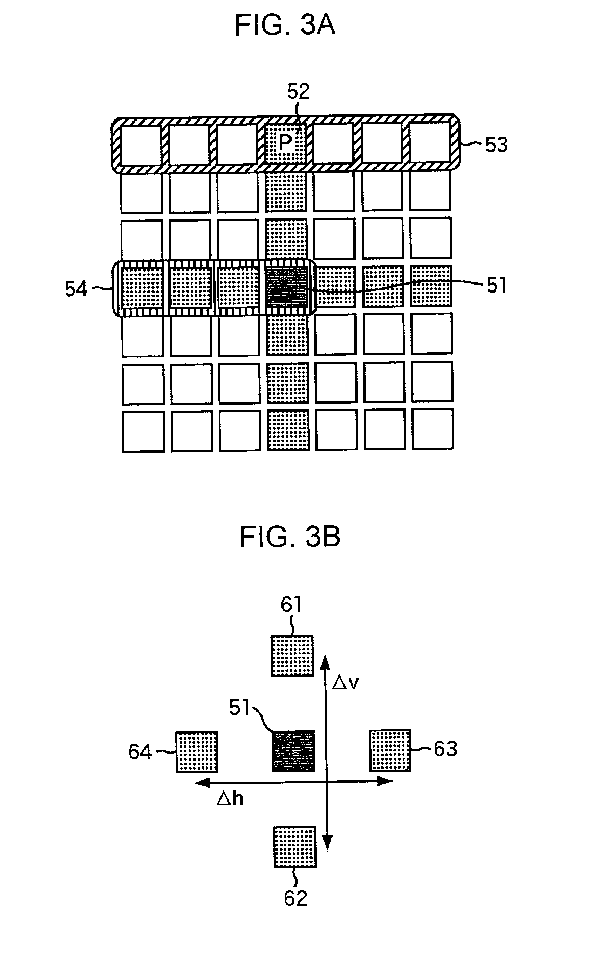

Here, referring to Fig. 3, a description will be given of the details of the LPF with an edge-detection function 21. In this regard, in Fig. 3, an uppermost-left pixel is described as a (1, 1) pixel, and a pixel of the m-th in the lateral direction and n-th in the vertical direction is described as a (m, n) pixel.

As shown in Fig. 3A, the LPF with an edge-detection function 21 sets the processing target to the surrounding pixels of vertical 7 pieces x lateral 7 pieces with respect to a remarked pixel 51 ((4, 4) pixel). First, the LPF with an edge-detection function 21 calculates each pixel value of (4, 1), (4, 2), (4, 3), (4, 5), (4, 6), (4, 7), (1, 4), (2, 4), (3, 4), (5, 4), (6, 4), and (7, 4), which are pixels to be subjected to median processing.

For example, when the pixel value of the pixel P ((4, 1) pixel) is calculated, a group of 7 pixels 53 in a horizontal direction is used. For example, an arithmetic mean is calculated by a low-pass filter of (1, 6, 15, 20, 15, 6, 1)/64. That is to say, calculation is performed by the pixel P = {(1, 1) pixel x 1/64} + {(2, 1) pixel x 6/64} + {(3, 1) pixel x 15/64} + {(4, 1) pixel x 20/64} + {(5, 1) pixel x 15/64} + {(6, 1) pixel x 6/64} + {(7, 1) pixel x 1/64}.

Next, the LPF with an edge-detection function 21 calculates a median value on the basis of the remarked pixel 51 and a group of three pixels 54, which are pixels to be left-side median processed, and uses the average value of the central two values to be the left-side average luminance component 64. Similarly, the upper-side average luminance component 61, the lower-side average luminance component 62, and the right-side average luminance component 63 are calculated. Thus, as shown in Fig. 3B, the average luminance components surrounding the remarked pixel 51 in four directions are obtained. The LPF with an edge-detection function 21 calculates the difference $\Delta v$, the average luminance components in the vertical direction and the difference $\Delta h$, the average luminance components in the horizontal direction, and determines the direction having a larger difference, that is to say, a smaller correlation to be an edge direction. After the edge direction is determined, the edge direction and the remarked pixel 51 are compared.

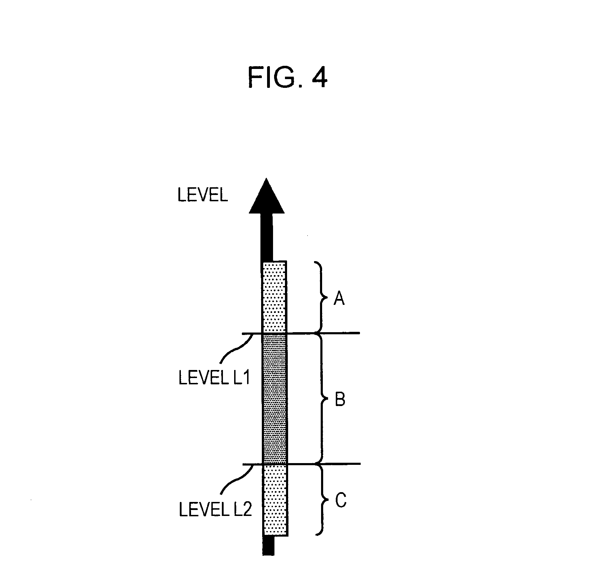

As shown in Fig. 4, when the remarked pixel 51 is in the range B (that is to say, between the level L1, the higher-level average luminance component and the level L2, the lower-level average luminance component), which is within the level difference in the edge direction, the LPF with an edge-detection function 21 outputs the remarked pixel 51 directly. On the other hand, when the remarked pixel 51 is in the range A (higher than the level L1, the average luminance component of the higher level), which is outside the level difference in the edge direction, or is in the range C (lower than the level L2 of the average luminance component of the lower level), the LPF with an edge-detection function 21 outputs the smoothed signal L (for example, an arithmetic mean value by a low-pass filter of 7 x 7 pixels) instead.

In this regard, in the example of Fig. 3, the processing target is set to the surrounding pixels of vertical 7 pieces x lateral 7 pieces for the remarked pixel 51. However, the processing target is not limited to this, and may be set to the pixels of vertical 9 pieces x lateral 9 pieces, the pixels of vertical 11 pieces x lateral 11 pieces, or the pixels of a larger number than these.

Description will be returned on Fig. 2. A microcomputer (mi-con) 24 supplies an input adjustment 1a, which represents an amount of offset to be subtracted from the input luminance level of the illumination-component offset table 27, to the adder 25, and supplies an input adjustment 1b representing an amount of gain, by which the input luminance level of the illumination-component offset table 27 is multiplied, to the multiplier 26. Also, the microcomputer 24 supplies an input adjustment 2a, which represents an amount of offset to be subtracted from the input luminance level of the illumination-component offset table 31, to the adder 29, and supplies an input adjustment 2b representing an amount of gain, by which the input luminance level of the illumination-component offset table 31 is multiplied, to the multiplier 30. Also, the microcomputer 24 supplies a gain 1c, which represents an amount of a maximum gain by which the output luminance level of the illumination-component offset table 27 is multiplied, to the multiplier 28, and supplies a gain 2c, which represents an amount of maximum gain by which the output luminance level of the illumination-component offset table 31 is multiplied, to the multiplier 32. Furthermore, the microcomputer 24 supplies an input adjustment add, which represents an amount of offset to be subtracted from the input luminance level of the reflectance-gain coefficient table and an output adjustment offset, which represents an amount of gain, by which the output luminance level of the reflectance-gain coefficient table is multiplied, to the reflectance-gain coefficient calculation section 35.

Here, the microcomputer 24 determines the histogram and adjusts the values of the input adjustments 1a, 1b, 2a, and 2b, the gains 1c and 2c, the input adjustment add, and the output adjustment offset. Alternatively, the microcomputer 24 adjusts these values on the basis of the instruction from the user. Also, the input adjustments 1a, 1b, 2a, and 2b, the gains 1c and 2c may be determined in the production process in advance.

The adder 25 adds the input adjustment 1a supplied from the microcomputer 24 to the signal L supplied from the LPF with an edge-detection function 21, and supplies the signal to the multiplier 26. The multiplier 26 multiplies the signal L supplied from the adder 25 by the input adjustment 1b supplied from the microcomputer 24, and supplies the signal to the illumination-component offset table 27.

The illumination-component offset table 27 adjusts and holds the amount of offset and the amount of gain of the offset table, which determines the amount of boost of the luminance level of ultra-low range on the basis of the input adjustments 1a and 1b supplied from the adder 25 and the multiplier 26. Also, the illumination-component offset table 27 refers to the offset table held, and supplies the amount of offset ofst1 in accordance with the luminance level of the signal L supplied through the adder 25 and the multiplier 26 to the multiplier 28. The multiplier 28 multiplies the amount of offset ofst1 supplied from the illumination-component offset table 27 by the gain 1c supplied from the microcomputer 24, and supplies the product to the adder 33.

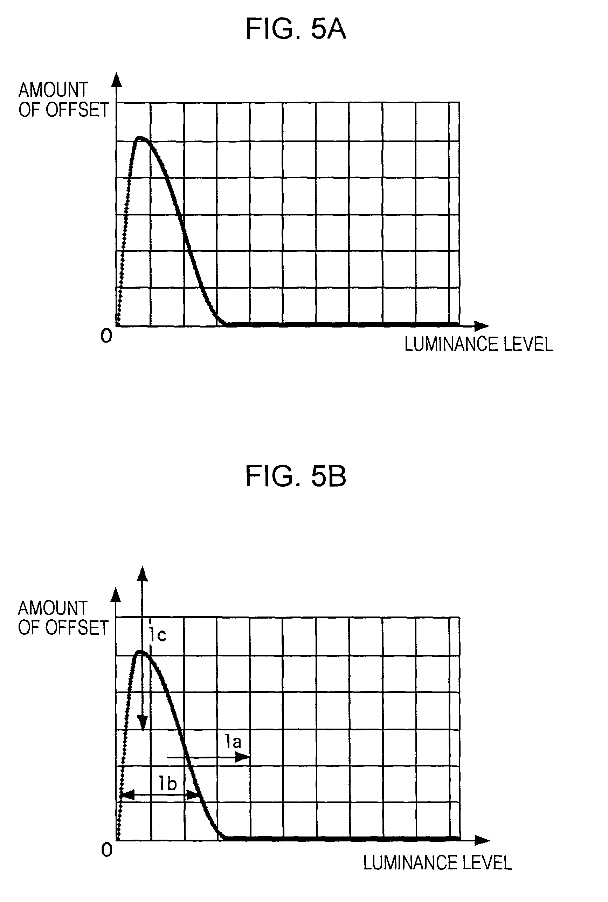

Fig. 5A illustrates an example of the offset table held by the illumination-component offset table 27. In the figure, the lateral axis represents an input luminance level, and the vertical axis represents the amount of the offset ofst1 (this is the same in Fig. 5B described below). Here, assuming that the input luminance level (lateral axis) normalized into 8 bits is x in the offset table shown in Fig. 5A, the amount of offset ofst1 (vertical axis) is represented, for example by the following expression (1).

[Expression 1]

$$ofst1 = \begin{cases} sin(\dfrac{1}{10}x) & ,(0 \le x < 17) \\ 1 - cos^2(\dfrac{1}{42.6}x - 5.1) & ,(17 \le x < 85) \\ 0 & ,(85 \le x < 255) \end{cases} \cdots (1)$$

Fig. 5B is a diagram for illustrating a relationship between the offset table held by the illumination-component offset table 27 and adjustment parameters. As shown in Fig. 5B, the input adjustment 1a (the arrow 1a in the figure) represents the amount of offset to be subtracted from the input luminance level to the offset table. That is to say, when the input is fixed, the input adjustment 1a is the amount to shifting the offset table in the right direction. The input adjustment 1b (the arrow 1b in the figure) represents the amount of gain by which the input luminance level to the offset table is multiplied. That is to say, when the input is fixed, the input adjustment 1b is the amount to increase or decrease the area width of the offset table, and corresponds to the adjustment of the luminance level range to be subjected processing. The gain 1c (the arrow 1c in the figure) represents the amount of a maximum gain by which the output luminance level from the offset table is multiplied. That is to say, the gain 1c is the amount to increase or decrease the vertical axis of the offset table, and is the value directly effective for the amount of boost of the processing.

Description will be returned on Fig. 2. The adder 29 adds the input adjustment 2a supplied from the microcomputer 24 to the signal L supplied from the edge-detection function 21, and supplies the signal to the multiplier 30. The multiplier 30 multiplies the input adjustment 2b supplied from the microcomputer 24 to the signal L supplied from the adder 29, and supplies the signal to the illumination-component offset table 31.

The illumination-component offset table 31 adjusts and holds the amount of offset and the amount of gain of the offset table, which determines the amount of boost of the luminance level of low range on the basis of the input adjustments 2a and 2b supplied from the adder 29 and the multiplier 30. Also, the illumination-component offset table 31 refers to the offset table held, and supplies the amount of offset ofst2 in accordance with the luminance level of the signal L supplied through the adder 29 and the multiplier 30 to the multiplier 32. The multiplier 32 multiplies the amount of offset ofst2 supplied from the illumination-component offset table 31 by the gain 2c supplied from the microcomputer 24, and supplies the product to the adder 33.

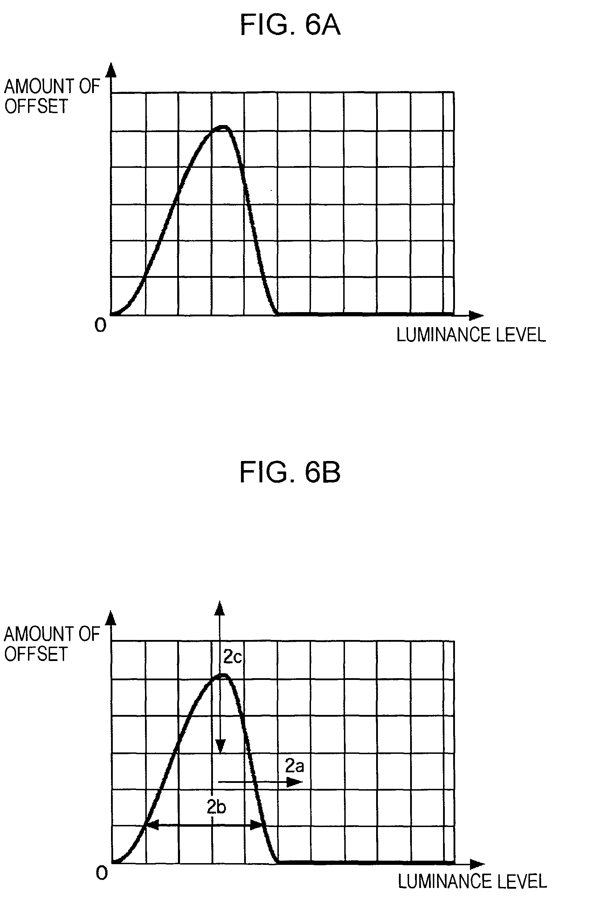

Fig. 6A illustrates an example of the offset table held by the illumination-component offset table 31. In the figure, the lateral axis represents an input luminance level, and the vertical axis represents the amount of the offset ofst2 (this is the same in Fig. 6B described below). Here, assuming that the input luminance level (lateral axis) normalized into 8 bits is x in the offset table shown in Fig. 6A, the amount of offset ofst2 (vertical axis) is represented, for example, by the following expression (2).

[Expression 2]

$$ofst2 = \begin{cases} 1-cos^2(\dfrac{1}{54}x) & ,(0 \leq x < 86) \\ 1-cos^2(\dfrac{1}{26.6}x + 7.8) & ,(86 \leq x < 128) \\ 0 & ,(128 \leq x < 255) \qquad \cdots(2) \end{cases}$$

Fig. 6B is a diagram for illustrating a relationship between the offset table held by the illumination-component offset table 31 and adjustment parameters. As shown in Fig. 6B, the input adjustment 2a (the arrow 2a in the figure) represents the amount of offset to be subtracted from the input luminance level to the offset table. That is to say, when the input is fixed, the input adjustment 2a is the amount to shift the offset table in the right direction. The input adjustment 2b (the arrow 2b in the figure) represents the amount of gain by which the input luminance level to the offset table is multiplied. That is to say, when the input is fixed, the input adjustment 2b is the amount to increase or decrease the area width of the offset table, and corresponds to the adjustment of the luminance level range to be subjected processing. The gain 2c (the arrow 2c in the figure) represents the amount of a maximum gain by which the output luminance level from the offset table is multiplied. That is to say, the gain 2c is the amount to increase or decrease the vertical axis of the offset table, and is the value directly effective for the amount of boost of the processing.

Description will be returned on Fig. 2. The adder 33 adds the amount of offset ofst2, which is supplied from the multiplier 32 and determines the amount of boost of the low range luminance level whose maximum gain amount is adjusted, to the amount of offset ofst1, which is supplied from the multiplier 28 and determines the amount of boost of the ultra-low range luminance level whose maximum gain amount is adjusted, and supplies the obtained the amount of offset (illumination-component addition/subtraction remaining amount T (L)) to the adder 34. The adder 34 adds the illumination-component addition/subtraction remaining amount T (L) supplied from the adder 33 to the signal L (original illumination component) supplied from the LPF with an edge-detection function 21, and supplies the obtained gain-optimum illumination component (signal T (L)') to the adder 37.

The adder 22 subtracts the signal L (illumination component) supplied from the LPF with an edge-detection function 21 from the luminance signal Y1 (original signal) input from the camera-signal processing section 12, and supplies the obtained texture component (signal R) to the adder 36.

The reflectance-gain coefficient calculation section 35 refers to the reflectance-gain coefficient table, determines the area outside the ultra-low luminance and low luminance boost areas to be an adaptive area among boosted luminance signal, and supplies it to the aperture controller 23. Also, when the reflectance-gain coefficient calculation section 35 determines the adaptive area, the reflectance-gain coefficient calculation section 35 adjusts the amount of offset and the amount of gain in the reflectance-gain coefficient table on the basis of the input adjustment add and the output adjustment offset supplied from the microcomputer 24.

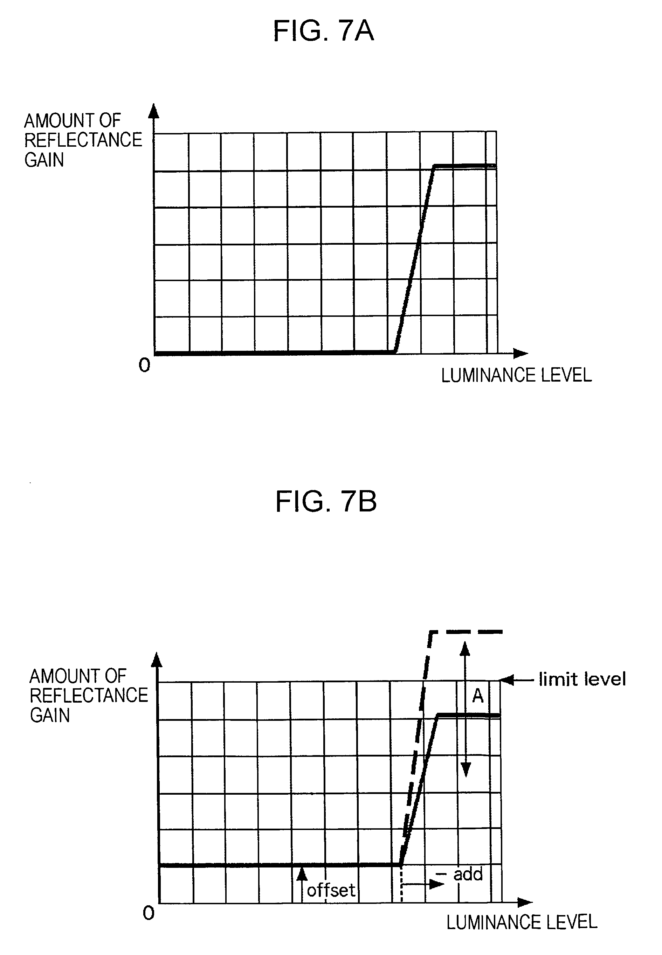

Fig. 7A illustrates an example of the reflectance-gain coefficient table held by the reflectance-gain coefficient calculation section 35. In the figure, the lateral axis represents an input luminance level, and the vertical axis represents the amount of the reflectance gain (this is the same in Fig. 7B described below). Fig. 7B is a diagram illustrating a relationship between the reflectance-gain coefficient table held by the reflectance-gain coefficient calculation section 35 and the adjustment parameters.

As shown in Fig. 7B, the output adjustment offset (the arrow offset in the figure) represents the amount of gain by which the output luminance level from the reflectance-gain coefficient table is multiplied. That is to say, the output adjustment offset is the amount which increases the vertical axis of the reflectance-gain coefficient table. An adjustment parameter A (the arrow A in the figure) represents the parameter for determining the amount of a maximum gain of the aperture controller 23. The input adjustment add (the arrow add in the figure) represents the amount of the offset to be subtracted from the input luminance level of the reflectance-gain coefficient table. That is to say, when the input is fixed, the input adjustment add is the amount to shift the reflectance-gain coefficient table in the right direction. A limit level represents the maximum limit (amount of a maximum gain) set in order to prevent the aperture controller 23 from adding an extra aperture signal.

Here, assuming that the input luminance level (lateral axis) normalized into 8 bits is x in the reflectance-gain coefficient table shown in Fig. 7B, the amount of aperture control apgain (vertical axis) is represented, for example by the following expression (3). Note that A represents the amount of maximum gain of the aperture controller 23, offset represents the amount of shifting in the upward direction in the reflectance-gain coefficient table, and add represents the amount of shifting in the right direction in the reflectance-gain coefficient table.

[Expression 3]

$$apgain' = \begin{cases} offset & ,(0 \le x \le 180) \\ \dfrac{A}{30}(x+add-180)+offset & ,(180 \le x \le 210) \\ A+offset & ,(210 \le x \le 255) \end{cases}$$

$$apgain = \begin{cases} apgain' & , if\ (apgain' < limit\ level) \\ limit\ level & , else \end{cases}$$

$$\cdots(3)$$

In this regard, when the amount of aperture control apgain' is smaller than limit level as a result of the calculation by the above expression (3) (the reflectance-gain coefficient table shown by a solid line in Fig. 7B), the apgain' is output as the amount of aperture control apgain. On the other hand, when the amount of aperture control apgain' is larger than limit level (the portion in which the value is greater than the limit level in the reflectance-gain coefficient table shown by a dotted line in Fig. 7B), the limit level is output as the amount of aperture control apgain.

Description will be returned on Fig. 2. The aperture controller 23 performs the illumination-component level dependent aperture correction of the luminance signal Y1 input from the camera-signal processing section 12 so as to adapt to the outside of the boost area of ultra-low luminance and low luminance on the basis of the adaptive area determined by the reflectance-gain coefficient calculation section 35, and supplies the signal to the adder 36.

The adder 36 adds the aperture-corrected luminance signal supplied from the aperture controller 23 to the signal R (the texture component produced by subtracting the illumination component from the original signal) supplied from the adder 22, and supplies the signal to the adder 37. The adder 37 adds the gain-optimum illumination component (the signal T (L)') supplied from the adder 34 to the texture component after the aperture correction supplied from the adder 36, and outputs the obtained luminance signal Y2 after the dynamic-range compression to the recording format processing section 14.

The chroma-gain coefficient calculation section 38 refers to the chroma-gain coefficient table, determines the amount of gain, by which the chroma signal put on the low luminance level in particular is multiplied among the boosted luminance signals, and supplies it to the multiplier 39.

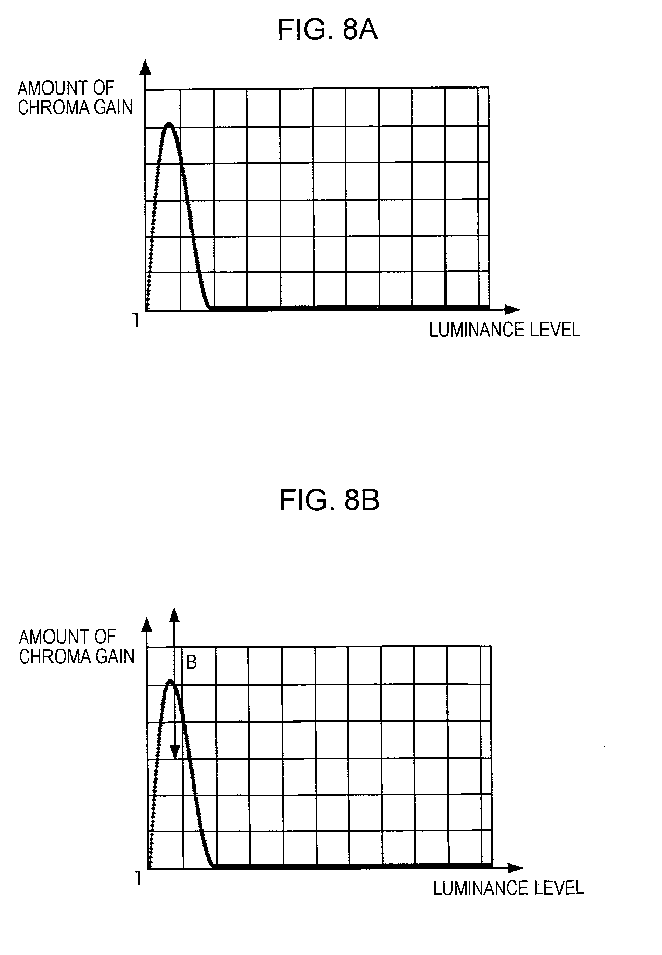

Fig. 8A illustrates an example of the chroma-gain coefficient table held by the chroma-gain coefficient calculation section 38. In the figure, the lateral axis represents an input luminance level, the vertical axis represents the chroma gain, and an offset of 1 is put on the value of this vertical axis (this is the same in Fig. 8B described below). Fig. 8B is a diagram for illustrating a relationship between the coefficient table held by the chroma-gain coefficient calculation section 38 and adjustment parameter. As shown in Fig. 8B, the adjustment parameter B represents the parameter determining the amount of the maximum gain of the chroma-gain coefficient table (the arrow B in the figure). Here, assuming that the input luminance level (lateral axis) normalized into 8 bits is x in the chroma-gain coefficient table shown in Fig. 8B, the amount of chroma gain cgain (vertical axis) is represented, for example by the following expression (4). Note that B represents the amount of the maximum gain of the chroma-gain coefficient table.

[Expression 4]

$$cgain = \begin{cases} \dfrac{B}{54} \sin(\dfrac{1}{10} x) & ,(0 \leq x < 17) \\ \dfrac{B}{54} (1 - \cos^2(\dfrac{1}{20} x - 5.6) & ,(17 \leq x < 50) \\ 0 & ,(50 \leq x < 255) \end{cases}$$

Description will be returned on Fig. 2. The multiplier 39 multiplies the input chroma signal C1 by the amount of gain supplied from the chroma-gain coefficient calculation section 38, and supplies the signal to the HPF (Highpass Filter) 41 and the adder 43. In this regard, in the chroma-gain coefficient table shown by Fig. 8B, an offset of 1 is put on the value of the vertical axis, and thus, for example, when the adjustment parameter B is 0.0, the chroma signal is directly output from the multiplier 39 as the input value.

The HPF 41 extracts the high-band component of the chroma signal supplied from the multiplier 39, and supplies it to the multiplier 42. A chroma-area determination section 40 selects an area to be subjected to the LPF on the chroma signal put on the luminance signal of the boosted area, and supplies it to the multiplier 42.

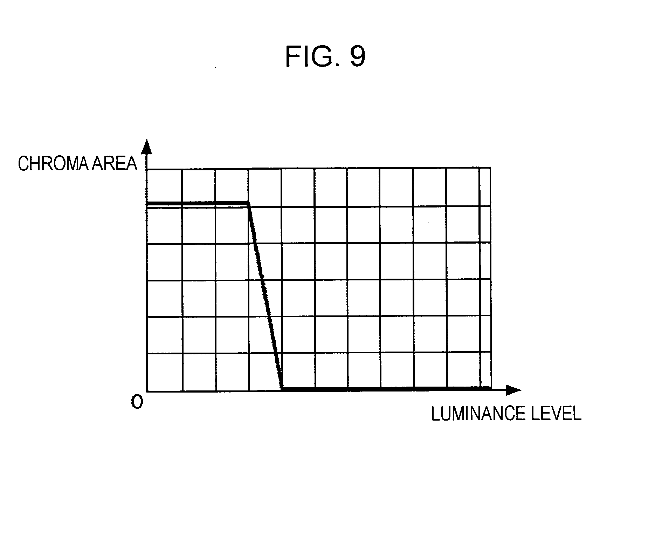

Fig. 9 illustrates an example of the determination area used for the selection by the chroma-area determination section 40. In the figure, the lateral axis represents an input luminance level, and the vertical axis represents the chroma gain. As shown in Fig. 9, the determination area linearly changes from the boost area and non-boost area. By this means, the application of the LPF is adjusted. Here, assuming that the input luminance level (lateral axis) normalized into 8 bits is x in the determination area shown in Fig. 9, the chroma area carea (vertical axis) is represented, for example by the following expression (5).

[Expression 5]

$$carea = \begin{cases} 1 & ,(0 \leq x < 75) \\ -\dfrac{1}{25} x + 4 & ,(75 \leq x < 100) \\ 0 & ,(100 \leq x < 255) \end{cases}$$

Description will be returned on Fig. 2. The multiplier 42 multiplies the chroma signal of high-band component supplied from the HPF 41 by the area, to which the LPF is applied, supplied from the chroma-area determination section 40, and supplies it to the adder 43. The adder 43 subtracts (That is to say, the LPF processing on the chroma signal of low-band level portion) the chroma signal of high-band component supplied from the multiplier 42 from the chroma signal supplied from the multiplier 39 in order to reduce chroma noise, and outputs the obtained chroma signal C2 after the dynamic-range compression to the recording-format processing section 14.

In the example of Fig. 2, the adder 25, the multiplier 26, the illumination-component offset table 27, and the multiplier 28 constitute the block which determines the amount of boost of the ultra-low band luminance level, and the adder 29, the multiplier 30, the illumination-component offset table 31, and the multiplier 32 constitute the block which determines the amount of boost of the low band luminance level. However, this is only one example, at least one block which determines the amount of boost of low luminance is necessary to be constituted, and that number may be one or may be two or more (plural).

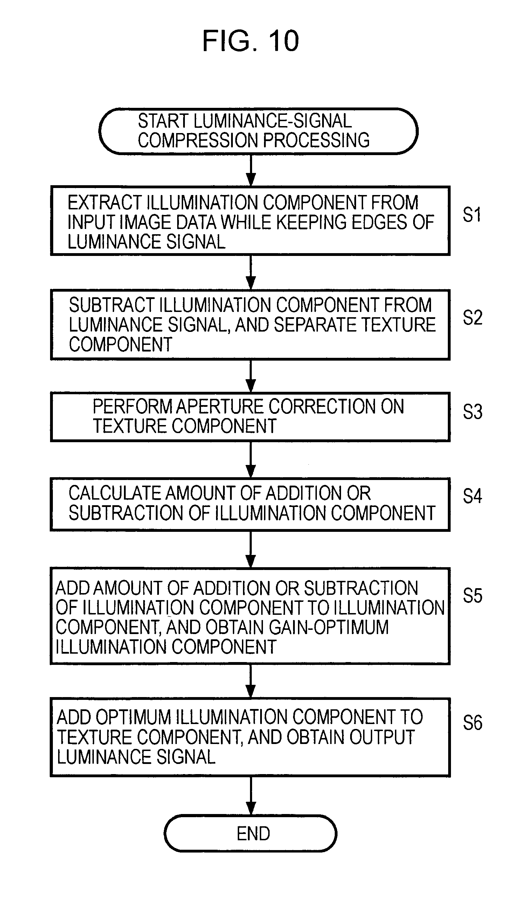

Next, a description will be given of the luminance-signal compression processing performed by the dynamic-range compression section 13 with reference to the flowchart in Fig. 10.

In step S1, the LPF with an edge-detection function 21 detects (Fig. 3B) edges having a sharp change of pixel values of the luminance signal Y1 among the image data input by the camera-signal processing section 12, smooths the luminance signal Y1 while keeping the edges, and extracts an illumination component (signal L). Here, as shown in Fig. 4, the LPF with an edge-detection function 21 determines whether or not to smooth the luminance signal Y1 depending on whether or not the remarked pixel 51 is in the difference in level in the edge direction (the range B). In step S2, the adder 22 subtracts the illumination component extracted by the processing of step S1 from the luminance signal Y1 (original signal) input by the camera-signal processing section 12, and separates the texture component (the signal R).

In step S3, the aperture controller 23 performs the illumination-component level dependent aperture correction of the luminance signal Y1 input from the camera-signal processing section 12 so as to adapt to the outside of the boost area of ultra-low luminance and low luminance on the basis of the adaptive area (Fig. 7B) determined by the reflectance-gain coefficient calculation section 35. In step S4, the adder 33 adds the amount of offset ofst1 (Fig. 5B), which is supplied from the illumination-component offset table 27 through the multiplier 28 and determines the amount of boost of the ultra-low band luminance level with the amount of offset, the amount of gain, and the amount of the maximum gain being adjusted, and the amount of offset ofst2 (Fig. 6B), which is supplied from the illumination-component offset table 31 through the multiplier 32 and determines the amount of boost of the low band luminance level with the amount of offset, the amount of gain, and the amount of the maximum gain being adjusted, and outputs the illumination-component addition/subtraction remaining amount T (L).

In step S5, the adder 34 adds the illumination component extracted by the processing of step S1 and the illumination-component addition/subtraction remaining amount T (L) calculated by the processing of step S4, and obtains the gain-optimum illumination component (signal T (L)'). In step S6, the adder 37 adds the texture component having been subjected to the aperture correction by the processing of step S3 and the gain-optimum illumination component (signal T (L)') obtained by the processing of step S5, and obtains the output luminance signal Y2 after the dynamic-range compression.

The output luminance signal Y2 after the dynamic-range compression obtained by the above processing is output to the recording-format processing section 14.

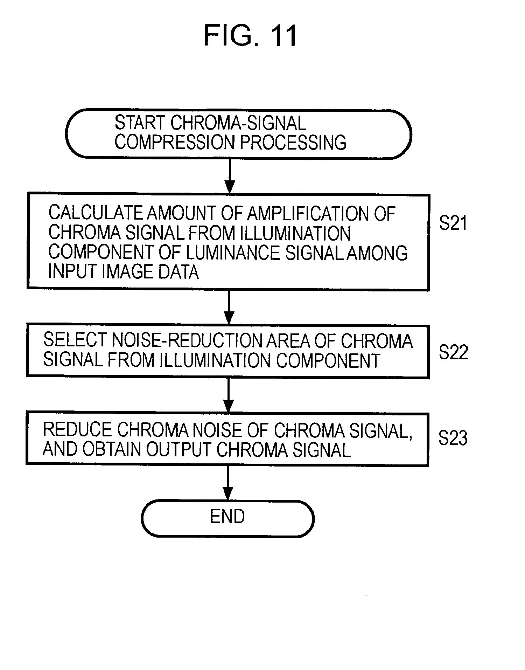

Next, a description will be given of the chroma-signal compression processing performed by the dynamic-range compression section 13 with reference to the flowchart in Fig. 11.

In step S21, the chroma-gain coefficient calculation section 38 calculates the amount of amplification (amount of gain) of the chroma signal C1 (Fig. 8B) from the illumination component of the luminance signal Y1 extracted by the processing of step S1 in Fig. 10 among the image data input from the camera-signal processing section 12. In step S22, the chroma-area determination section 40 selects (Fig. 9) the noise-reduction area (That is to say, the area to which the LPF is applied) of the chroma signal C1 from the illumination component of the luminance signal Y1 extracted by the processing of step S1 in Fig. 10.

In step S23, the adder 43 reduces the chroma noise of the chroma signal of the low luminance level to which the gain is multiplied on the basis of the noise reduction area selected by the processing of step S22, and obtains the chroma signal C2 after the dynamic-range compression.

The chroma signal C2 after the dynamic-range compression obtained by the above processing is output to the recording-format processing section 14.

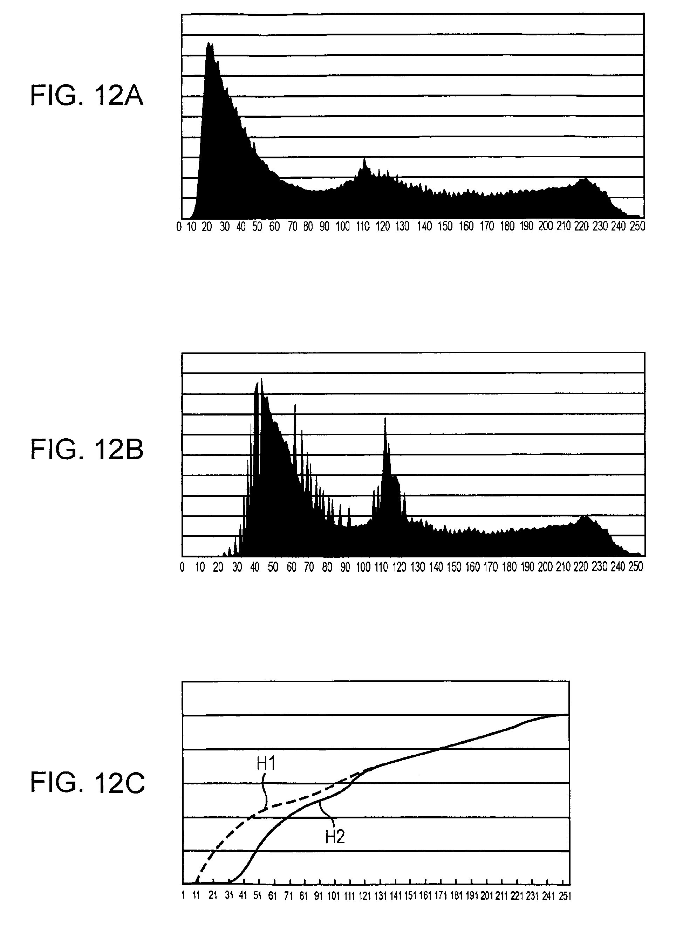

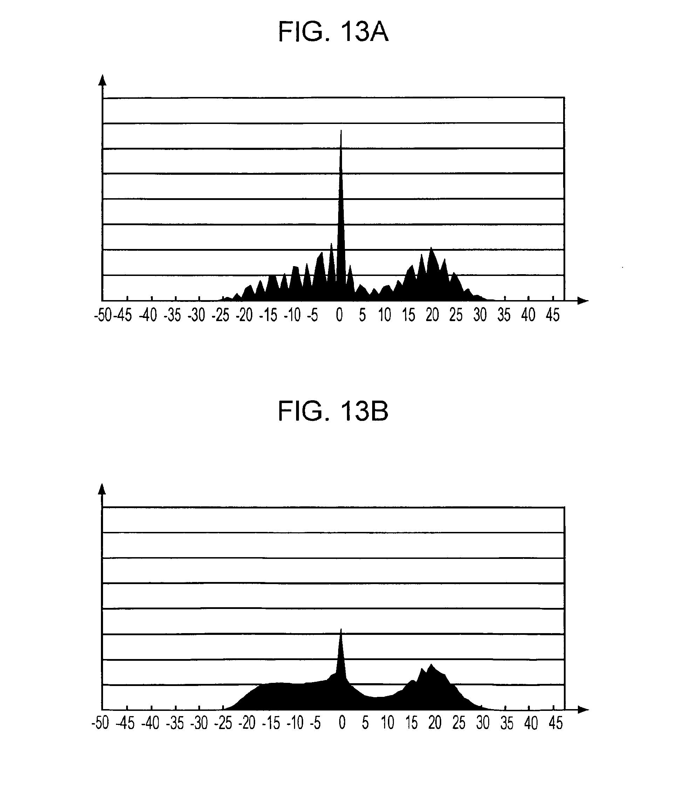

Next, a description will be given of the processing result when the above compression processing is performed with reference to Figs. 12 and 13.

Fig. 12A illustrates an example of a histogram of the luminance component when the low luminance is simply subjected to the boost processing without considering the influence of the bit compression on the input image data in an 8-bit range changing from 0 to 255. Fig. 12B illustrates an example of a histogram of the luminance component when the compression processing is performed by the present invention on the input image data in an 8-bit range changing from 0 to 255. Fig. 12C illustrates an example of an accumulated histogram of Fig. 12A and Fig. 12B. In the figure, H1 represents the accumulated histogram of Fig. 12A, and H2 represents the accumulated histogram of Fig. 12B.

In the case of simple histogram equalization, data is concentrated on the low luminance (in the figure, the left side portion in the lateral direction) (Fig. 12A). In contrast, by applying the compression processing of the present invention, the pixel data of the low luminance side is appropriately shifted to the right direction while the shape of the histogram of the high luminance side (the right side portion in the lateral direction in the figure) is kept. That is to say, as shown in Fig. 12C, it is understood that the accumulated histogram H1 and the accumulated histogram H2 have almost the same shape in the high luminance side (the right side portion in the lateral direction in the figure), but the accumulated histogram H2 is shifted to the right direction further than the accumulated histogram H1.

Fig. 13A illustrates an example of a histogram of the chroma component when the low luminance is simply subjected to the boost processing without considering the influence of the bit compression on the input image data in an 8-bit range changing from - 128 to 127. Fig. 13B illustrates an example of a histogram of the chroma component when the compression processing is performed by the present invention on the input image data in an 8-bit range changing from -128 to 127. However, the histogram in the level range from -50 to 50 is illustrated in Figs. 13A and 13B in order to show the details of the variation of the boosted level range.

In the case of simple histogram equalization processing, the histogram of the chroma component of the low level (the central portion in the lateral axis direction in the figure) does not change under the influence of noise, and is comb-shaped (Fig. 13A). In contrast, by applying the compression processing of the present invention, the chroma component is appropriately subjected to gain up corresponding to the boost area of the luminance component, and noise is reduced, and thus the histogram is smoothly changed from the center (low level area) to the outside (Fig. 13B).

As is understood from these results, it is possible to improve contrast without losing sharpness, and to compress a captured digital image appropriately.

Also, although not shown in the figure, for example, when the input range is increased, such as a 10-bit range, etc., the low luminance portion also has grayscales potentially. However, it is possible to obtain an image with smoother grayscales for the boost portion by applying the compression processing of the present invention.

As described above, in a digital-image recording apparatus, such as a digital video camera, etc., it is possible to amplify the image data of the portion other than edges while keeping the edges among the image data of the portion having a low luminance and having been difficult to obtain contrast so far on the digital image captured by the solid-state imaging device 11 by applying the present invention. Thus, it becomes possible to improve contrast without losing sharpness, and to appropriately compress the image into the recording range on the luminance signal and the chroma signal of the camera-signal processing system having a wider input range than the recording range.

Also, by applying the present invention, appropriate amplification is performed on the chroma signal placed on the area on which the luminance component is amplified. Thus, it is possible to improve the reduction of chroma noise at the same time. Accordingly, it is possible to obtain a natural dynamic-range image, which has not simply become white. Furthermore, by holding the amplification portion of the luminance component as a table of the amount of offset, it is possible to achieve the boost processing of the low luminance and the ultra-low luminance portions by the addition processing, and thus it becomes possible to reduce the processing load.

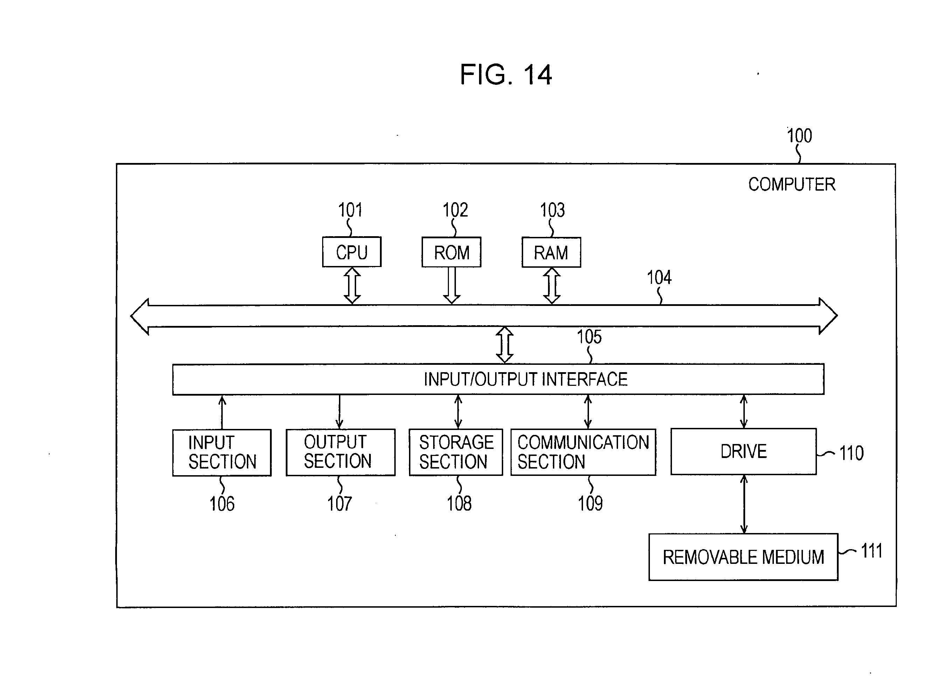

As described above, these series of processing can be executed by hardware, but can also be executed by software. In this case, for example the dynamic-range compression section 13 is implemented by a computer 100 as shown in Fig. 14.

In Fig. 14, a CPU (Central Processing Unit) 101 executes various kinds of processing in accordance with the programs stored in a ROM 102 or the programs loaded into a RAM (Random Access Memory) 103 from a storage section 108. Also, the RAM 103 appropriately stores the data, etc., necessary for the CPU 101 to execute various kinds of processing.

The CPU 101, the ROM 102, and the RAM 103 are mutually connected through a bus 104. An input/output interface 105 is also connected to the bus 104.

An input section 106 including a keyboard, a mouse, etc., and an output section 107 including a display, etc., the storage section 108, and a communication section 109 are connected to the input/output interface 105. The communication section 109 performs communication processing through a network.

A drive 110 is also connected to the input/output interface 105 as necessary, and a removable medium 111, such as a magnetic disk, an optical disc, a magneto-optical disc, or a semiconductor memory, etc., is attached appropriately. The computer programs read from there are installed in the storage section 108 as necessary.

The program recording medium for recording the programs, which are installed in a computer and is executable by the computer, not only includes, as shown in Fig. 14, a removable medium 111 including, such as a magnetic disk (including a flexible disk), an optical disc (including a CD-ROM (Compact Disc-Read Only Memory) and a DVD (Digital Versatile Disc)), a magneto-optical disc (including MD (Mini-Disc) (registered trademark)), or a semiconductor memory, etc. Also, the program recording medium includes the ROM 103 storing the programs or a hard disk included in the storage section 108, etc., which are provided to the user in a built-in state in the main unit of the apparatus.

In this regard, in this specification, the steps describing the programs to be stored in the recording medium include the processing to be performed in time series in accordance with the included sequence as a matter of course. Also, the steps include the processing which is not necessarily executed in time series, but is executed in parallel or individually.

Also, in this specification, a system represents the entire apparatus including a plurality of apparatuses.

**Claims**

1. An image processing apparatus comprising:

extraction means for smoothing a luminance signal while keeping edges having a sharp change of pixel values of the luminance signal among an input image, and extracting a illumination component;
separation means for separating a texture component on the basis of the luminance signal and the illumination component extracted by the extraction means;

first calculation means for calculating an illumination-component addition/subtraction remaining amount on the basis of the illumination component extracted by the extraction means;

first acquisition means for acquiring a gain-optimum illumination component on the basis of the illumination component and the illumination-component addition/subtraction remaining amount calculated by the first calculation means; and

second acquisition means for acquiring an output luminance signal on the basis of the texture component separated by the separation means and the gain-optimum illumination component acquired by the first acquisition means.

2. The image processing apparatus according to Claim 1, further comprising:

second calculation means for calculating an amount of a chroma signal amplification on a chroma signal among the input image on the basis of the illumination component extracted by the extraction means;

selection means for selecting a noise reduction area of the chroma signal on the basis of the illumination component extracted by the extraction means; and

third acquisition means for acquiring an output chroma signal on the basis of the chroma signal amplified by the amount of the chroma signal amplification calculated by the second calculation means and the noise reduction area selected by the selection means.

3. The image processing apparatus according to Claim 1, wherein the extraction means calculates representing values of the surrounding pixels including a remarked pixel in an upward direction, a downward direction, a leftward direction, and a rightward direction, and detects an edge direction on the basis of the difference value of the representing values in the calculated upward direction and downward direction and the difference value of the representing values in the leftward direction and rightward direction, and determines whether to perform smoothing on the luminance signal with respect to the detected edge direction.

4. The image processing apparatus according to Claim 1, further comprising:

gain-calculation means for calculating the amount of gain of aperture correction from the illumination component extracted by the extraction means; and

correction means for performing aperture correction on the texture component separated by the separation means on the basis of the amount of gain calculated by the gain-calculation means.

5. The image processing apparatus according to Claim 1, wherein the first calculation means has a fixed input/output function, and calculates the illumination-component addition/subtraction remaining amount on the basis of the fixed input/output function.

6. The image processing apparatus according to Claim 5, wherein the first calculation means has adjustment means for variably adjusting the fixed input/output function.

7. The image processing apparatus according to Claim 1, wherein the first calculation means includes one processing block or a plurality of processing blocks for each level of the input signal.

8. A method of image processing comprising:

an extracting step of smoothing a luminance signal while keeping edges having a sharp change of pixel values of the luminance signal among an input image, and extracting a illumination component;

a separating step of separating a texture component on the basis of the luminance signal and the illumination component extracted by the processing of the extracting step;

a first calculating step of calculating an illumination-component addition/subtraction remaining amount on the basis of the illumination component extracted by the processing of the extracting step;

a first acquiring step of acquiring a gain-optimum illumination component on the basis of the illumination component and the illumination-component addition/subtraction remaining amount calculated by the processing of the first calculating step; and

a second acquiring step of acquiring an output luminance signal on the basis of the texture component separated by the processing of the separating step and the gain-optimum illumination component acquired by the processing of the first acquiring step.

9. A program for causing a computer to execute image processing comprising:

an extracting step of smoothing a luminance signal while keeping edges having a sharp change of pixel values of the luminance signal among an input image, and extracting a illumination component;
a separating step of separating a texture component on the basis of the luminance signal and the illumination component extracted by the processing of the extracting step;
a first calculating step of calculating an illumination-component addition/subtraction remaining amount on the basis of the illumination component extracted by the processing of the extracting step;
a first acquiring step of acquiring a gain-optimum illumination component on the basis of the illumination component and the illumination-component addition/subtraction remaining amount calculated by the processing of the first calculating step; and
a second acquiring step of acquiring an output luminance signal on the basis of the texture component separated by the processing of the separating step and the gain-optimum illumination component acquired by the processing of the first acquiring step.

# FIG. 1

EP 1 755 331 A1

SOLID-STATE IMAGING DEVICE — 11

CAMERA-SIGNAL PROCESSING SECTION — 12

DYNAMIC-RANGE COMPRESSION SECTION — 13

RECORDING-FORMAT PROCESSING SECTION — 14

RECORDING MEDIUM — 15

S1  C1  Y1  C2  Y2  S2

1

# FIG. 2

# FIG. 3A

# FIG. 3B

# FIG. 4

LEVEL

LEVEL L1

LEVEL L2

A

B

C

## FIG. 5A

AMOUNT OF OFFSET

0  LUMINANCE LEVEL

## FIG. 5B

AMOUNT OF OFFSET

1c

1a

1b

0  LUMINANCE LEVEL

# FIG. 6A

# FIG. 6B

# FIG. 7A

AMOUNT OF REFLECTANCE GAIN

0

LUMINANCE LEVEL

# FIG. 7B

AMOUNT OF REFLECTANCE GAIN

limit level

A

0

offset

add

LUMINANCE LEVEL

# FIG. 8A

# FIG. 8B

# FIG. 9

# FIG. 10

```
┌─────────────────────────────────────┐
│   START LUMINANCE-SIGNAL             │
│   COMPRESSION PROCESSING             │
└─────────────────────────────────────┘
                  │
                  ▼
┌─────────────────────────────────────┐
│ EXTRACT ILLUMINATION COMPONENT FROM  │   S1
│ INPUT IMAGE DATA WHILE KEEPING EDGES OF │
│ LUMINANCE SIGNAL                     │
└─────────────────────────────────────┘
                  │
                  ▼
┌─────────────────────────────────────┐
│ SUBTRACT ILLUMINATION COMPONENT FROM │   S2
│ LUMINANCE SIGNAL, AND SEPARATE TEXTURE │
│ COMPONENT                            │
└─────────────────────────────────────┘
                  │
                  ▼
┌─────────────────────────────────────┐
│ PERFORM APERTURE CORRECTION ON       │   S3
│ TEXTURE COMPONENT                    │
└─────────────────────────────────────┘
                  │
                  ▼
┌─────────────────────────────────────┐
│ CALCULATE AMOUNT OF ADDITION OR      │   S4
│ SUBTRACTION OF ILLUMINATION COMPONENT │
└─────────────────────────────────────┘
                  │
                  ▼
┌─────────────────────────────────────┐
│ ADD AMOUNT OF ADDITION OR SUBTRACTION │   S5
│ OF ILLUMINATION COMPONENT TO ILLUMINATION │
│ COMPONENT, AND OBTAIN GAIN-OPTIMUM   │
│ ILLUMINATION COMPONENT               │
└─────────────────────────────────────┘
                  │
                  ▼
┌─────────────────────────────────────┐
│ ADD OPTIMUM ILLUMINATION COMPONENT TO │   S6
│ TEXTURE COMPONENT, AND OBTAIN OUTPUT │
│ LUMINANCE SIGNAL                     │
└─────────────────────────────────────┘
                  │
                  ▼
            ┌───────────┐
            │    END    │
            └───────────┘
```

# FIG. 11

```
┌──────────────────────────────────┐
│   START CHROMA-SIGNAL            │
│   COMPRESSION PROCESSING          │
└──────────────────────────────────┘
                 │
                 ▼
┌──────────────────────────────────┐
│ CALCULATE AMOUNT OF AMPLIFICATION OF │  S21
│ CHROMA SIGNAL FROM ILLUMINATION   │
│ COMPONENT OF LUMINANCE SIGNAL AMONG │
│ INPUT IMAGE DATA                  │
└──────────────────────────────────┘
                 │
                 ▼
┌──────────────────────────────────┐
│ SELECT NOISE-REDUCTION AREA OF CHROMA │  S22
│ SIGNAL FROM ILLUMINATION COMPONENT │
└──────────────────────────────────┘
                 │
                 ▼
┌──────────────────────────────────┐
│ REDUCE CHROMA NOISE OF CHROMA SIGNAL, │  S23
│ AND OBTAIN OUTPUT CHROMA SIGNAL   │
└──────────────────────────────────┘
                 │
                 ▼
          ┌──────────────┐
          │     END      │
          └──────────────┘
```

FIG. 12A

FIG. 12B

FIG. 12C

## FIG. 13A

## FIG. 13B

## FIG. 14

EP 1 755 331 A1

## INTERNATIONAL SEARCH REPORT

| International application No. |
| --- |
| PCT/JP2005/010350 |

A. CLASSIFICATION OF SUBJECT MATTER
   Int.Cl$^7$  H04N5/20, G06T5/00, 5/20, H04N1/407

According to International Patent Classification (IPC) or to both national classification and IPC

B. FIELDS SEARCHED

Minimum documentation searched (classification system followed by classification symbols)
   Int.Cl$^7$  H04N5/20, G06T5/00, 5/20, H04N1/407

Documentation searched other than minimum documentation to the extent that such documents are included in the fields searched
   Jitsuyo Shinan Koho        1922-1996   Jitsuyo Shinan Toroku Koho   1996-2005
   Kokai Jitsuyo Shinan Koho   1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 10-51661 A  (Samsung Electronics Co., Ltd.),<br>20 February, 1998 (20.02.98),<br>Par. Nos. [0008] to [0026]; Figs. 1, 2<br>& US 5995656 A         & EP 809209 A2 | 1,2,4-9<br>3 |
| Y<br>A | JP 2001-298621 A  (Sony Corp.),<br>26 October, 2001 (26.10.01),<br>Par. Nos. [0008] to [0026]; Figs. 1 to 6<br>& US 2001/38716 A1 | 1,2,4-9<br>3 |
| Y | JP 2000-32482 A  (Canon Inc.),<br>28 February, 2000 (28.01.00),<br>Par. Nos. [0003] to [0007]; Fig. 4<br>(Family: none) | 2 |

| ☒  Further documents are listed in the continuation of Box C. | ☐  See patent family annex. |
| --- | --- |

*     Special categories of cited documents:
"A"   document defining the general state of the art which is not considered
      to be of particular relevance
"E"   earlier application or patent but published on or after the international
      filing date
"L"   document which may throw doubts on priority claim(s) or which is
      cited to establish the publication date of another citation or other
      special reason (as specified)
"O"   document referring to an oral disclosure, use, exhibition or other means
"P"   document published prior to the international filing date but later than
      the priority date claimed

"T"   later document published after the international filing date or priority
      date and not in conflict with the application but cited to understand
      the principle or theory underlying the invention
"X"   document of particular relevance; the claimed invention cannot be
      considered novel or cannot be considered to involve an inventive
      step when the document is taken alone
"Y"   document of particular relevance; the claimed invention cannot be
      considered to involve an inventive step when the document is
      combined with one or more other such documents, such combination
      being obvious to a person skilled in the art
"&"   document member of the same patent family

| Date of the actual completion of the international search<br>   01 August, 2005 (01.08.05) | Date of mailing of the international search report<br>   16 August, 2005 (16.08.05) |
| --- | --- |
| Name and mailing address of the ISA/<br>   Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2005/010350 |

C (Continuation).　DOCUMENTS CONSIDERED TO BE RELEVANT

| Category* | Citation of document, with indication, where appropriate, of the relevant passages | Relevant to claim No. |
| --- | --- | --- |
| Y | JP 2003-101815 A　(Fuji Photo Film Co., Ltd.),<br>04 April, 2003 (04.04.03),<br>Par. Nos. [0110] to [0120]; Fig. 8<br>(Family: none) | 2 |
| Y | JP 2001-24907 A　(Matsushita Electric Industrial Co., Ltd.),<br>26 January, 2001 (26.01.01),<br>Par. Nos. [0012] to [0014]; Fig. 6<br>(Family: none) | 4 |
| A | JP 2004-120224 A　(Fuji Photo Film Co., Ltd.),<br>15 April, 2004 (15.04.04),<br>Full text; Figs. 3, 4<br>(Family: none) | 1,8,9 |

Form PCT/ISA/210 (continuation of second sheet) (January 2004)

**EP 1 755 331 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001298621 A